# EUROPÄISCHE PATENTSCHRIFT

(11) **EP 0 694 792 B1**
(45) Veröffentlichungstag und Bekanntmachung des Hinweises auf die Patenterteilung: **27.01.1999**
(21) Anmeldenummer: 95111482.6
(22) Anmeldetag: 21.07.1995
(51) Int. Cl.: G01S 11/14, B66B 1/34

(54) **Einrichtung zur Positionserfassung**
Apparatus for determining position
Appareil de détermination de position

(30) Priorität: 28.07.1994 DE 4426793
(43) Veröffentlichungstag der Anmeldung: 31.01.1996
(73) Patentinhaber: K.A. SCHMERSAL GmbH & Co., D-42279 Wuppertal (DE)
(72) Erfinder: Hoepken, Hermann, D-45549 Sprockhövel (DE)
(74) Vertreter: Sparing - Röhl - Henseler Patentanwälte

(56) Entgegenhaltungen:
- EP-A- 0 022 363
- DE-A- 3 208 747
- DE-U- 9 116 466
- US-A- 4 392 214

## Beschreibung

Die Erfindung betrifft eine Einrichtung zur Positionserfassung eines längs einer vorgegebenen Strecke beweglichen Gegenstandes.

Aus DE-U-9 116 466 ist eine Einrichtung zur Positionserfassung eines längs einer vorgegebenen Strecke beweglichen Gegenstandes bekannt. Dabei wird die Phasenlage des empfangenen Signals bezüglich des gesendeten Signals ausgewertet, um die Position des Gegenstandes zu erfassen, wobei das permanent ausgesendete Signal eine Luftstrecke, etwa die Streckenlänge eines Aufzugsschachtes, durchläuft und eine Kompensation von wechselnden Umweltbedingungen erfordert.

Aus der DE-A-3 208 747 ist eine weitere Einrichtung zur Positionserfassung eines längs einer vorgegebenen Strecke beweglichen Gegenstandes, nämlich eines höhenbeweglichen Lastaufnahmemittels an einem Hubgerüst, bekannt, bei der die Laufzeiten von ausgesendeten Ultraschallsignalen zur Positionserfassung ausgewertet werden. Hierbei wird die Position des Gegenstandes aus drei verschiedenen, parallel in Luft als Schalleiter verlaufenden Meßstrecken errechnet und ist dementsprechend aufwendig.

Aus der US-A-4 392 214 ist schließlich ein Verfahren zum Feststellen des Aufschlagortes von Fremdkörpern in einer Rohrleitung bekannt, bei dem die Laufzeitdifferenz der in dem als Schalleiter wirkenden Rohr erzeugten Schallwellen zu zwei beabstandeten Schallaufnehmern ausgewertet wird.

Aufgabe der Erfindung ist es, eine Einrichtung zur Positionserfassung eines längs einer vorgegebenen Strecke beweglichen Gegenstandes zu schaffen, mit der es möglich ist, einfach und genau die Position des beweglichen Gegenstandes auf einer vorgegebenen Strecke zu erkennen.

Gegenstand der Erfindung ist daher eine Einrichtung zur Positionserfassung eines längs einer vorgegebenen Strecke beweglichen Gegenstandes, mit einem sich entlang der Strecke erstreckenden Schallsignalleiter mit vorbestimmter, gleichmäßiger Schallausbreitungsgeschwindigkeit sowie einem mit einem Signalgeber verbundenen, an dem beweglichen Gegenstand befindlichen Signaleinkoppler zum Einkoppeln eines Schallsignals in den Schallsignalleiter, wobei an beiden Enden des Schallsignalleiters Signalauskoppler angeordnet sind, die jeweils mit einem Zähler verbunden sind, wobei die beiden Zähler über einen Taktgeber getaktet und mit einem Subtrahierer für die Ausgangssignale der beiden Zähler verbunden sind, wobei das Ausgangssignal des Subtrahierers als Maß für die Laufzeitdifferenz des eingekoppelten Schallsignals von der Einkopplungsstelle zu den Signalauskopplern von einer Auswerteeinheit zu einem Signal verarbeitbar ist, das für die momentane Position des beweglichen Gegenstandes auf der Strecke repräsentativ ist, wobei der Signaleinkoppler mit einer Signalabstandszeit arbeitet, die größer als die Schallaufzeit von einem Ende der Strecke zum anderen ist.

Weitere Ausgestaltungen der Erfindung sind der nachfolgenden Beschreibung und den Unteransprüchen zu entnehmen.

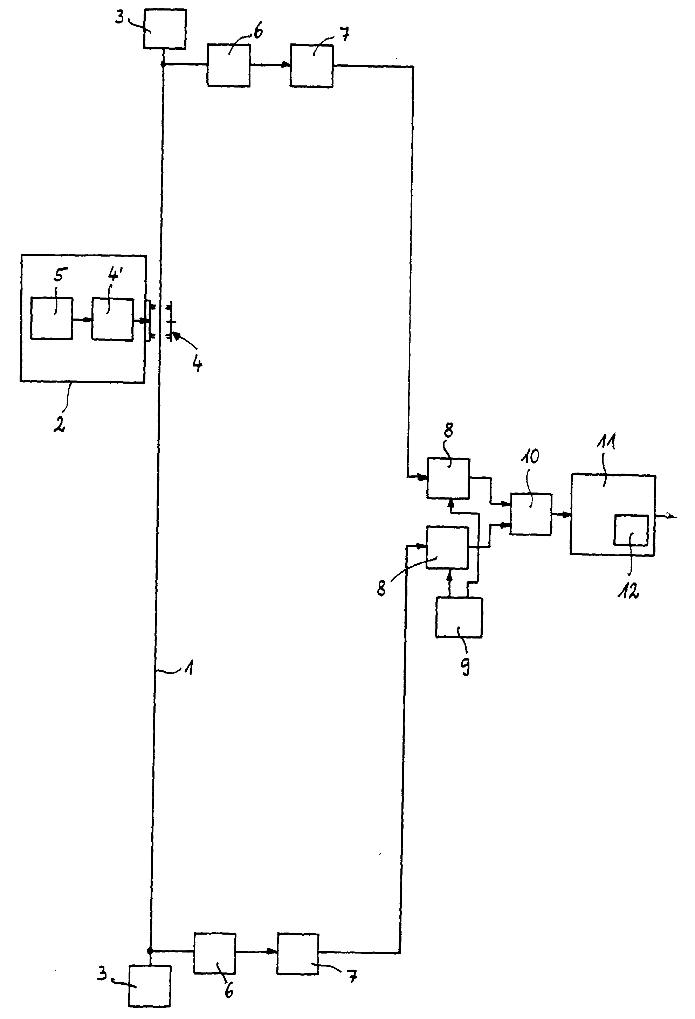

Die Erfindung wird nachstehend anhand eines in der beigefügten Abbildung schematisch dargestellten Ausführungsbeispiels näher erläutert.

Die dargestellte Einrichtung zur Positionserfassung, die insbesondere zur Erfassung der Position eines Fahrstuhlkorbs verwendbar ist, umfaßt einen Schallsignalleiter 1, etwa eine Stahlschiene oder ein Drahtseil, der sich längs einer vorgegebenen Strecke erstreckt, längs der ein beweglicher Gegenstand 2, etwa ein Fahrstuhlkorb, hin- und herbeweglich ist. Der Schallsignalleiter 1 mit vorbestimmter, gleichmäßiger Schallausbreitungsgeschwindigkeit ist an beiden Enden in einer dämpfenden Einspannung oder Halterung 3 gedämpft eingespannt bzw. gehalten.

Der bewegliche Gegenstand 2 trägt einen Signaleinkoppler 4, der mit einem Signalgeber 5, etwa einem Oszillator, über einen Signalanpassungskreis 4' verbunden ist. Der Signaleinkoppler 4, der insbesondere induktiv arbeitet, koppelt periodisch ein vom Signalgeber 5 empfangenes Signal in den Schallsignalleiter 1 ein. Bei dem einzukoppelnden Signal kann es sich um einen kurzen elektromagnetischen Impuls, etwa einfachen Puls oder um eine Pulsfolge, oder um eine periodische Frequenzumtastung handeln. Bei einer zeitkonstanten Einkopplung ist zwischen den eingekoppelten Signalen jeweils ein Zeitabstand größer als die Laufdauer des Schallsignals von einem Ende des Schallsignalleiters 1 zum anderen. Eine Synchronisation mit dem beweglichen Gegenstand ist nicht notwendig.

An den Enden des Schallsignalleiters 1 ist jeweils ein Signalauskoppler 6 angeordnet. Hierbei handelt es sich vorzugsweise um einen piezoelektrischen Signalauskoppler 6, jedoch können auch induktiv oder kapazitiv arbeitende verwendet werden.

Jeder Signalauskoppler 6 ist mit einer Signalanpassungsschaltung 7 verbunden, deren Ausgangsleitungen jeweils zu einem Zähler 8 führen. Beide Zähler 8 werden von einem Taktgeber 9, einem Oszillator, getaktet. Die Taktzeit des Taktgebers 9 ist erheblich niedriger als die Laufzeit des Schalls von einem Ende des Schallsignalleiters 1 zum anderen und entsprechend der gewünschten Meßstreckenauflösung gewählt. Die Ausgänge der Zähler 8 werden einem Subtrahierer 10 zugeführt, der die Differenz der Ausgangssignale der Zähler 8 bildet und einer Auswerteinheit 11, etwa einem Mikroprozessor, zuführt, wo das Ausgangsignal des Subtrahierers 10 ausgewertet wird.

Befindet sich der bewegliche Gegenstand 2 in der Mitte zwischen den Signalauskopplern 6, sind die Ausgänge der Zähler 8 gleich und ihre Differenz null. Befindet sich der Gegenstand 2 (bei vertikaler Strecke) oberhalb der Mitte, ist der Ausgang des an den oberen Signalauskoppler 6 angeschlossenen Zählers 8 kleiner als die des anderen. Aus der vom Subtrahierer 10 ermittelten Laufzeitdifferenz des Schallsignals im Schallsignalleiter 1 und der bekannten Schallgeschwindigkeit in diesem ergibt sich die Entfernung des beweglichen Gegenstandes 2 von der Mitte. Da dann, wenn sich der bewegliche Gegenstand 2 unterhalb der Mitte befinden würde, die Differenz ein anderes Vorzeichen haben würde, ist auch bekannt, ob sich der beweglichen Gegenstand 2 oberhalb oder unterhalb der Mitte befindet, d.h. damit ist die genaue Lage des beweglichen Gegenstandes 2 errechenbar. Ein so von der Auswerteeinheit 11 erzeugbares, digitales oder analoges Positionssignal kann zur Nachfolgesteuerung verwendet werden.

Ein Watchdog 12 (überwachungsschaltung) der Auswerteeinheit 11 kann zur einfachen Überwachung der Meßstrecke bei einer zeitkonstanten Einkopplung des Einkoppelsignals verwendet werden. Bei einer Verschmutzung, die in der Lage ist, das Signal auf dem Schallsignalleiter 1 zu bedämpfen, überschreitet die vom Subtrahierer 10 festgestellte Differenz einen vorbestimmten Wert, auf die der Watchdog 12 anspricht, um ein entsprechendes Warnsignal od.dgl. auszulösen.

Die Schallgeschwindigkeit in einem Schallsignalleiter 1 aus Stahl liegt bei etwa 5300 m/s. Bei einer zeitlichen Auflösung von 188 ns, wozu eine Taktgeberfrequenz von 5,3 MHz notwendig ist, liegt die Ortsauflösung der Meßstrecke bei 1 mm.

## Patentansprüche

1. Einrichtung zur Positionserfassung eines längs einer vorgegebenen Strecke beweglichen Gegenstandes (2), mit einem sich entlang der Strecke erstreckenden Schallsignalleiter (1) mit vorbestimmter, gleichmäßiger Schallausbreitungsgeschwindigkeit sowie mit einem mit einem Signalgeber (5) verbundenen, an dem beweglichen Gegenstand (2) befindlichen Signaleinkoppler (4) zum Einkoppeln eines Schallsignals in den Schallsignalleiter (1), wobei an beiden Enden des Schallsignalleiters (1) Signalauskoppler (6) angeordnet sind, die jeweils mit einem Zähler (8) verbunden sind, wobei die beiden Zähler (8) über einen Taktgeber (9) getaktet und mit einem Subtrahierer (10) für die Ausgangssignale der beiden Zähler (8) verbunden sind, wobei das Ausgangssignal des Subtrahierers (10) als Maß für die Laufzeitdifferenz des eingekoppelten Schallsignals von der Einkopplungsstelle zu den Signalauskopplern (6) von einer Auswerteeinheit (11) zu einem Signal verarbeitet wird, das für die momentane Position des beweglichen Gegenstandes (2) auf der Strecke repräsentativ ist, wobei der Signaleinkoppler (4) mit einer Signalabstandszeit arbeitet, die größer als die Schallaufzeit von einem Ende der Strecke zum anderen ist.

2. Einrichtung nach Anspruch 1, bei der der Taktgeber für die Zähler (8) mit einem für eine vorgesehene Streckenauflösung notwendigen Mindestfrequenz arbeitet.

3. Einrichtung nach Anspruch 1 oder 2, bei der die Signalauskoppler (6) piezoelektrische Auskoppler sind.

4. Einrichtung nach Anspruch 1 oder 2, bei der die Signalauskoppler (6) kapazitive Auskoppler sind.

5. Einrichtung nach Anspruch 1 oder 2, bei der die Signalauskoppler (6) induktive Auskoppler sind.

6. Einrichtung nach einem der Ansprüche 1 bis 5, bei der der Schallsignalleiter (1) ein sich entlang der Strecke erstreckender metallischer Körper ist.

7. Einrichtung nach Anspruch 6, bei der der Schallsignalleiter (1) eine Metallschiene ist.

8. Einrichtung nach Anspruch 6, bei der der Schallsignalleiter (1) ein Drahtseil ist.

9. Einrichtung nach einem der Ansprüche 1 bis 8, bei der der Signaleinkoppler (4) ein induktiver Einkoppler ist.

10. Einrichtung nach einem der Ansprüche 1 bis 9, bei der die Auswerteeinheit (11) eine Überwachungsschaltung (12) umfaßt, die ein Warnsignal auslöst, wenn die vom Subtrahierer (10) festgestellte Differenz einen vorbestimmten Wert überschreitet.

11. Einrichtung nach einem der Ansprüche 1 bis 10, bei der der bewegliche Gegenstand (2) ein Aufzugkorb ist.

## Claims

1. Device for monitoring the position of an object (2) moving along a given route, with a sound signal lead (1), extending along the route and with a predetermined, uniform sound propagation speed as well as with a signal coupler (4) connected to a signal transmitter (5) and located on the moving object (2), for coupling a sound signal in the sound signal lead (1), signal decouplers (6) being located at both ends of the sound signal lead (1), which are respectively connected to a counter (8), the two counters (8) being synchronised by a synchronising generator (9) and connected to a subtractor (10) for the output signals of the two counters (8), the output signal of the subtractor (10) being processed as a measure of the transit time difference of the coupled sound signal from the coupling point to the signal decoupler (6) by an evaluation unit (11) as a signal, which is representative of the instantaneous position of the moving object (2) on the route, the signal coupler (1) operating with a signal spacing time, which is greater than the sound travelling time from one end of the route to the other.

2. Device according to Claim 1, in which the synchronising generator for the counter (8) operates with a minimum frequency necessary for a route resolution provided.

3. Device according to Claim 1 or 2, in which the signal decouplers (6) are piezoelectric decouplers.

4. Device according to Claim 1 or 2, in which the signal decouplers (6) are capacitive decouplers.

5. Device according to Claim 1 or 2, in which the signal decouplers (6) are inductive decouplers.

6. Device according to one of Claims 1 to 5, in which the sound signal lead (1) is a metallic member extending along the route.

7. Device according to Claim 6, in which the sound signal lead (1) is a metal rail.

8. Device according to Claim 6, in which the sound signal lead (1) is a wire cable.

9. Device according to one of Claims 1 to 8, in which the signal coupler (4) is an inductive coupler.

10. Device according to one of Claims 1 to 9, in which the evaluation unit (11) comprises a monitoring circuit (12), which emits a warning signal when the difference ascertained by the subtractor (10) exceeds a predetermined value.

11. Device according to one of Claims 1 to 10, in which the movable object (2) is a hoist basket.

## Revendications

1. Installation pour saisir la position d'un objet (2) mobile le long d'un trajet prédéterminé, comportant un conducteur de signaux sonores (1) qui s'étend le long de ce trajet et présente une vitesse de propagation sonore régulière prédéfinie, ainsi qu'un coupleur de signal (4) se trouvant sur l'objet mobile (2), relié à un émetteur de signaux (5) et destiné à introduire dans le conducteur (1) un signal sonore, tandis qu'aux extrémités dudit conducteur (1) sont disposés des découpleurs de signaux (6), lesquels sont reliés chacun à un compteur (8) respectif, les deux compteurs (8) étant rythmés par une horloge (9) et reliés à un soustracteur (10) des signaux de sortie des deux compteurs (8), le signal de sortie dudit soustracteur (10), servant d'unité à la différence des temps de parcours du signal sonore couplé entre le point d'introduction et les découpleurs (6), étant traité par une unité de calcul (11) pour devenir un signal qui est représentatif de la position momentanée de l'objet mobile (2) sur ledit trajet, le coupleur (4) fonctionnant sur la base d'un temps d'écart entre les signaux qui est supérieur au temps de parcours du son d'une extrémité à l'autre du trajet.

2. Installation selon la revendication 1, dans laquelle l'horloge des compteurs (8) fonctionne à une fréquence minimale, nécessaire pour une résolution prévue du trajet.

3. Installation selon la revendication 1 ou 2, dans laquelle les découpleurs de signaux (6) sont des découpleurs piézo-électriques.

4. Installation selon la revendication 1 ou 2, dans laquelle les découpleurs de signaux (6) sont des découpleurs capacitifs.

5. Installation selon la revendication 1 ou 2, dans laquelle les découpleurs de signaux (6) sont des découpleurs inductifs.

6. Installation selon l'une des revendications 1 à 5, dans laquelle le conducteur de signaux (1) est un corps métallique s'étendant le long du trajet.

7. Installation selon la revendication 6, dans laquelle le conducteur de signaux sonores (1) est un rail métallique.

8. Installation selon la revendication 6, dans laquelle le conducteur de signaux sonores (1) est un câble métallique.

9. Installation selon l'une des revendications 1 à 8, dans laquelle le coupleur de signaux (4) est un coupleur inductif.

10. Installation selon l'une des revendications 1 à 9, dans laquelle l'unité de calcul (11) comprend un circuit de surveillance (12) qui déclenche un signal d'alarme si la différence constatée par le soustracteur (10) dépasse une valeur prédéterminée.

11. Installation selon l'une des revendications 1 à 10, dans laquelle l'objet mobile (2) est un panier monte-charge.
